# FASCICULE DE BREVET EUROPEEN

(11) **EP 0 826 543 B1**
(45) Date de publication et mention de la délivrance du brevet: **07.06.2000**
(21) Numéro de dépôt: 97114228.6
(22) Date de dépôt: 18.08.1997
(51) Int. Cl.: B60K 1/02, B60K 6/04, B60L 11/12

(54) **Ensemble de traction hybride série et véhicule comportant un tel ensemble**
Serien- Hybrid- Fahrzeug und Antriebseinheit dafür
Series hybrid drive unit and associated vehicle

(30) Priorité: 27.08.1996 FR 9610477
(43) Date de publication de la demande: 04.03.1998
(73) Titulaire: The Swatch Group Management Services AG, 2501 Biel (CH)
(72) Inventeur: Brunner, Raphäel, 2557 Studen b. Biel (CH); Apter, Robert, 2504 Biel (CH)
(74) Mandataire: Ravenel, Thierry Gérard Louis

(56) Documents cités:
- EP-A- 0 543 390
- EP-A- 0 544 597
- WO-A-95/33630
- DE-A- 2 404 427
- FR-A- 328 430
- US-A- 4 351 405
- US-A- 5 172 784

## Description

La présente invention concerne un ensemble de traction hybride série pour un véhicule automobile, ledit ensemble comprenant un groupe générateur électrique, au moins un groupe de traction tandem comportant deux moteurs électriques entraînant des arbres de sortie respectifs mutuellement alignés et couplés respectivement à une roue gauche et à une roue droite du véhicule, et au moins un convertisseur statique branché en série entre le groupe générateur et le groupe de traction tandem.

L'invention concerne également un véhicule à traction hybride série comportant un tel ensemble de traction.

Dans la plupart des cas, les roues motrices entraînées par un groupe de traction électrique tandem sont couplées aux arbres de sortie du groupe au moyen d'arbres de transmission articulés offrant un jeu angulaire suffisant pour les débattements de la suspension, ainsi que pour le braquage des roues si elles sont directrices. Il importe que ces arbres de transmission aient une longueur aussi grande que possible, afin de réduire l'angle maximum des joints d'articulation, c'est-à-dire qu'il est souhaitable que les sorties du groupe de traction soient aussi proches l'une de l'autre que possible.

Le brevet US 5 172 784, qui divulgue les caractéristiques du préambule de la revendication 1, décrit un véhicule automobile ayant un système de propulsion du genre indiqué plus haut, dans lequel le groupe de traction tandem comprend deux moteurs électriques coaxiaux, ayant un stator commun et deux rotors mutuellement alignés qui entraînent chacun une roue arrière par un arbre correspondant. Le groupe générateur, constitué dans ce cas par un moteur à combustion externe associé à une génératrice linéaire, est placé à l'avant du véhicule. Il alimente les moteurs électriques à travers un ensemble convertisseur placé en partie au milieu et en partie à l'arrière du véhicule. Une batterie auxiliaire capable de fournir un appoint d'énergie motrice est placée devant l'essieu arrière.

Le groupe de traction prévu dans le brevet susmentionné est malheureusement trop encombrant pour être utilisé dans un petit véhicule, notamment parce que sa longueur axiale est égale à la somme des longueurs des deux moteurs, ce qui réduit excessivement la longueur des arbres de transmission. En outre, comme les moteurs tournent à la même vitesse que les roues, ils doivent avoir un diamètre relativement grand pour fournir un couple suffisant.

Il est possible de pallier ces inconvénients en utilisant des réducteurs. Chaque roue motrice est alors entraînée par un motoréducteur composé d'un moteur électrique et d'un réducteur approprié. Le brevet US 4 351 405 prévoit simplement de supprimer les arbres de transmission et de les remplacer chacun par un réducteur, mais cette solution n'est pas satisfaisante du point de vue de la suspension. D'autre part, comme il s'agit d'un véhicule à traction hybride parallèle, le moteur thermique est placé près de l'autre essieu, qu'il entraîne directement.

Une meilleure solution est décrite dans le brevet français 328 430, qui concerne une voiture électrique à essieu moteur rigide. Un réducteur est associé à chaque roue de cet essieu et il est raccordé, par un long arbre transversal articulé, au moteur correspondant qui est placé près de l'autre roue, c'est-à-dire que les deux arbres traversent presque tout le véhicule, respectivement devant et derrière l'essieu rigide. Cette disposition reste néanmoins assez encombrante et les réducteurs ne sont pas suspendus.

Dans la voiture électrique faisant l'objet de la demande de brevet EP 0 544 597, le groupe de traction placé au milieu de la largeur du véhicule comprend deux moteurs disposés parallèlement l'un devant l'autre, et deux réducteurs disposés respectivement à gauche et à droite. La longueur axiale de ce groupe est donc assez grande, ce qui restreint celle des arbres de transmission.

Le document EP-A-0 249 807 décrit un groupe de traction tandem à réducteurs dans lequel les deux motoréducteurs sont disposés symétriquement l'un de l'autre par rapport au plan médian, leurs réducteurs étant juxtaposés le long de ce plan à l'intérieur d'un carter commun. Les deux moteurs électriques, qui sont du type à rotor extérieur, sont disposés suivant un même axe que les arbres d'entrée des réducteurs, chaque moteur se trouvant du même côté du plan médian que la roue qu'il entraîne. La longueur axiale du groupe de traction, dans la direction transversale du véhicule, est égale à la somme des longueurs axiales des deux réducteurs et des deux moteurs électriques. Il en résulte un encombrement relativement grand du groupe de traction, des deux côtés du plan médian qui se trouve habituellement au milieu de la largeur du véhicule, ce qui peut empêcher d'implanter d'autres organes relativement volumineux à côté du groupe de traction. En particulier, dans un véhicule à traction hybride, il devient difficile d'installer le moteur thermique dans le même compartiment de la caisse du véhicule.

La demande de brevet DE 24 04 427 décrit, pour un chariot élévateur purement électrique, un groupe de traction analogue, mais dans lequel les deux moteurs se trouvent du même côté d'un carter de réducteur commun, afin de faciliter leur accessibilité pour l'entretien. Il n'y a pas de groupe générateur dans ce véhicule.

La présente invention vise à éviter les inconvénients mentionnés plus haut, en agençant l'ensemble de traction sous une forme particulièrement compacte, avec un groupe de traction tandem peu encombrant dans la direction axiale des moteurs électriques et ménageant de la place pour les autres composants au voisinage de ces moteurs, notamment sur les côtés, tout en maintenant les sorties des réducteurs aussi près que possible l'une de l'autre, sur un même axe transversal et au voisinage du milieu de la largeur du véhicule.

Selon un but particulier de l'invention, la disposition mutuelle des deux motoréducteurs devrait permettre de les juxtaposer au groupe générateur composé d'un moteur thermique et d'une génératrice électrique pour former un bloc peu encombrant, dans un véhicule automobile à système de traction du type hybride série ou mixte série-parallèle. Comme un tel ensemble de traction comprend généralement un convertisseur de fréquence et une batterie d'accumulateurs, l'invention vise également à obtenir une disposition avantageuse de cet ensemble à l'intérieur du véhicule.

Selon un aspect de base de la présente invention, il est prévu un ensemble de traction du genre indiqué en préambule, caractérisé en ce que le groupe de traction tandem comporte deux motoréducteurs comprenant chacun l'un des moteurs électriques et un réducteur pourvu d'un desdits arbres de sortie et d'un arbre d'entrée couplé à un rotor dudit moteur électrique, l'arbre d'entrée de chaque réducteur étant parallèle à l'arbre de sortie et à distance de celui-ci, les deux réducteurs étant disposés respectivement de part et d'autre d'un plan médian, en ce que, dans au moins l'un des motoréducteurs, le moteur électrique s'étend de l'autre côté dudit plan médian par rapport au réducteur, les arbres d'entrée respectifs des réducteurs étant parallèles et distants l'un de l'autre, et en ce que le groupe générateur est disposé sensiblement en regard de l'un des moteurs électriques, de l'autre côté du plan médian par rapport à ce moteur.

Il en résulte une disposition spatiale approximativement en Z d'au moins une chaîne cinématique entraînant la roue motrice correspondante, c'est-à-dire la chaîne comprenant un moteur électrique, le réducteur associé et l'arbre de transmission couplé à la sortie du réducteur, et les deux chaînes cinématiques s'étendent dans des plans différents bien que leurs branches inférieures, représentant les arbres de sortie et les arbres de transmission, soient généralement coaxiales. Comme les deux moteurs électriques ne sont pas placés dans le prolongement l'un de l'autre, chacun d'eux peut être adjacent au réducteur correspondant dans le plan médian du groupe de traction, si bien que l'encombrement axial de l'ensemble des deux motoréducteurs ne dépasse pas la longueur d'un moteur électrique de chaque côté du plan médian. En outre, l'encombrement axial du groupe au niveau de chaque moteur électrique est encore plus faible puisqu'il se réduit à la somme de la longueur axiale d'un moteur et d'un réducteur. Comme la longueur axiale des réducteurs est relativement faible et que chaque réducteur est adjacent au plan médian, il subsiste beaucoup de place disponible à côté de lui au niveau de son arbre d'entrée, du côté opposé au moteur électrique. Cette place est occupée par le groupe générateur électrique, pour former un ensemble très compact qu'on peut loger entre les deux roues motrices qu'il entraîne. Plus particulièrement, un tel groupe générateur se compose habituellement d'un moteur thermique et d'une génératrice électrique couplée à l'arbre du moteur thermique, le groupe générateur étant relié aux moteurs électriques par l'entremise d'un convertisseur statique. De préférence, l'arbre du moteur thermique et la génératrice sont disposés sensiblement au niveau des arbres de sortie.

De préférence, les deux motoréducteurs présentent chacun la disposition en Z décrite ci-dessus, de sorte qu'ils peuvent être sensiblement identiques. Les deux moteurs électriques se trouvent alors respectivement de part et d'autre du plan médian et la longueur globale du groupe de traction est égale à la somme des longueurs des deux moteurs.

Un véhicule à traction hybride série selon l'invention comporte un ensemble de traction tel que défini ci-dessus. De préférence, le groupe de traction tandem est couplé à des roues arrière du véhicule, tandis que le convertisseur peut être placé à l'avant du véhicule et raccordé à une batterie d'accumulateurs électriques placée entre le convertisseur et le groupe de traction.

D'autres caractéristiques et avantages de la présente invention apparaîtront dans la description suivante d'une forme de réalisation préférée, donnée à titre d'exemple non limitatif en référence aux dessins annexés, dans lesquels :
- la figure 1 est un schéma illustrant les principes de base d'un groupe de traction électrique tandem utilisé dans la présente invention,
- la figure 2 est une vue en perspective d'un ensemble de traction hybride série pour véhicule automobile selon l'invention,
- la figure 3 est une vue en élévation de l'arrière de l'ensemble de la figure 2,
- la figure 4 est une vue en élévation du côté droit du même ensemble,
- la figure 5 est une vue en plan du même ensemble, et
- la figure 6 est une vue en élévation du côté gauche du même ensemble.

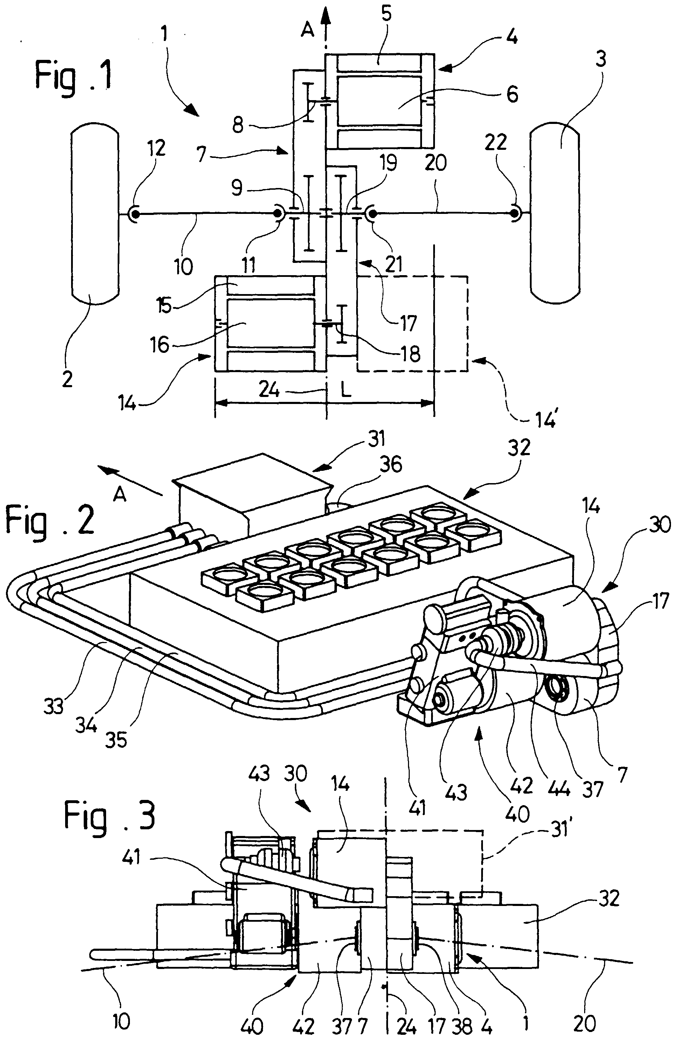

Le groupe de traction 1 représenté schématiquement à la figure 1 est destiné à entraîner conjointement deux roues motrices du même essieu d'un véhicule automobile, à savoir une roue arrière gauche 2 et une roue arrière droite 3, la direction de l'avant étant indiquée par la flèche A. La roue gauche 2 est entraînée par un premier motoréducteur comprenant un moteur électrique gauche 4, pourvu d'un stator 5 et d'un rotor 6, et un réducteur gauche 7 pourvu d'un arbre d'entrée 8 couplé au rotor 6 et d'un arbre de sortie 9 couplé à la roue gauche 2 au moyen d'un arbre de transmission gauche 10 muni de deux joints articulés 11 et 12. De même, la roue droite 3 est entraînée par un second motoréducteur comprenant un moteur électrique droit 14, pourvu d'un stator 15 et d'un rotor 16, et un réducteur droit 17 pourvu d'un arbre d'entrée 18 couplé au rotor 16 et d'un arbre de sortie 19 couplé à la roue droite 3 au moyen d'un arbre de transmission droit 20 muni de deux joints articulés 21 et 22. Les sorties des deux réducteurs 7 et 17, constituées par les joints articulés 11 et 21, sont relativement proches l'une de l'autre, de part et d'autre d'un plan médian 24 du groupe de traction 1, les deux réducteurs étant appliqués l'un contre l'autre le long de ce plan dans la région de leurs arbres de sortie 9 et 19. Les réducteurs 7 et 17 peuvent être identiques et de divers types, par exemple à chaîne ou à engrenages, à un ou plusieurs étages, pour autant que l'arbre de sortie soit distant de l'arbre d'entrée dans chaque réducteur.

Selon une caractéristique particulièrement avantageuse du groupe 1, l'entrée et la sortie de chaque réducteur 7, 17 se trouvent respectivement sur des faces opposées du réducteur, de sorte que chaque ligne d'entraînement d'une roue a un tracé en forme de Z. De plus, ces deux tracés en Z sont en quelque sorte imbriqués l'un dans l'autre, comme le montre la figure 1, ce qui réduit l'encombrement du groupe de traction dans la direction axiale, à savoir la direction des arbres parallèles des moteurs électriques et des réducteurs.

Ainsi, le moteur électrique gauche 4 entraînant la roue gauche 2 se trouve en fait à droite du plan médian 24, tandis que le réducteur 7 et l'arbre de transmission 10 de gauche se trouvent à gauche de ce plan. De même, le moteur droit 14 se trouve à gauche du plan médian 24, tandis que le réducteur 17 et l'arbre de transmission 20 de droite sont à droite de ce plan. Etant donné que les deux motoréducteurs 4, 7 et 14, 17 se croisent, la longueur axiale totale L du groupe qu'ils forment est égale seulement à la somme des longueurs des deux moteurs électriques 4 à 14. En pratique, L peut être de l'ordre de 40 cm. De plus, l'encombrement axial du groupe 1 est encore inférieur à cette valeur L dans chaque région du groupe : dans la région des arbres de sortie 9 et 19, il est égal à la somme des longueurs axiales des deux réducteurs, et dans la région de chaque moteur électrique 4, 14, il est égal à la somme des longueurs d'un moteur et d'un réducteur. C'est ainsi qu'il reste beaucoup de place libre à côté du groupe de traction 1, en particulier à gauche du motoréducteur gauche comprenant le moteur 4 et le réducteur 7 et à droite du motoréducteur droit comprenant le moteur 14 et le réducteur 17. Cette place peut être utilisée avantageusement par des composants additionnels du groupe de traction, comme on le décrira plus loin.

On notera que le plan médian 24 du groupe de traction peut coïncider avec le plan longitudinal médian du véhicule, mais pas nécessairement. En effet, comme les sorties des deux réducteurs sont assez proches l'une de l'autre, les arbres de transmission 10 et 20 peuvent avoir des longueurs différentes, sans que le plus court subisse des angulations trop prononcées. Un léger décalage du plan médian 24 par rapport au milieu du véhicule offre encore plus de place disponible d'un côté du groupe de traction 1.

Un autre avantage de la disposition croisée décrite ci-dessus réside dans la possibilité de placer les deux moteurs électriques 4 et 14 à des niveaux différents, en fonction de l'espace disponible dans le véhicule. S'ils sont au même niveau, la figure 1 étant alors considérée comme une vue en plan, l'encombrement vertical du groupe 1 est faible, mais son encombrement longitudinal est plus important. Comme les arbres de sortie 9, 19 doivent généralement être à un niveau aussi bas que possible, il peut être avantageux de placer les axes des moteurs 4, 14 à un niveau un peu plus élevé afin d'éloigner ces moteurs du sol. On décrira plus loin, en référence aux autres figures, une disposition dans laquelle les tracés en Z des deux lignes d'entraînement s'étendent dans deux plans respectifs perpendiculaires, l'un vertical et l'autre horizontal, d'où résulte une grande compacité du groupe de traction.

Dans la figure 1, on a en outre représenté schématiquement une variante où le moteur 14 entraînant la roue droite 3 est placé dans la position 14' dessinée en traits interrompus, du même côté que cette roue 3 par rapport à son réducteur 17 et au plan médian 24. Dans ce cas, la chaîne cinématique entraînant la roue droite a donc un tracé approximativement en forme de C, tandis que l'autre chaîne conserve un tracé en Z qui recouvre une partie du tracé en C en direction axiale. L'encombrement axial total du groupe correspond à la somme des longueurs axiales d'un moteur et des deux réducteurs. Comme les deux moteurs se trouvent à droite du plan médian 24, il reste beaucoup de place disponible à gauche de ce plan. Les deux moteurs peuvent être voisins, par exemple si la position 14' du moteur droit est prévue au-dessus de l'arbre de transmission correspondant 20.

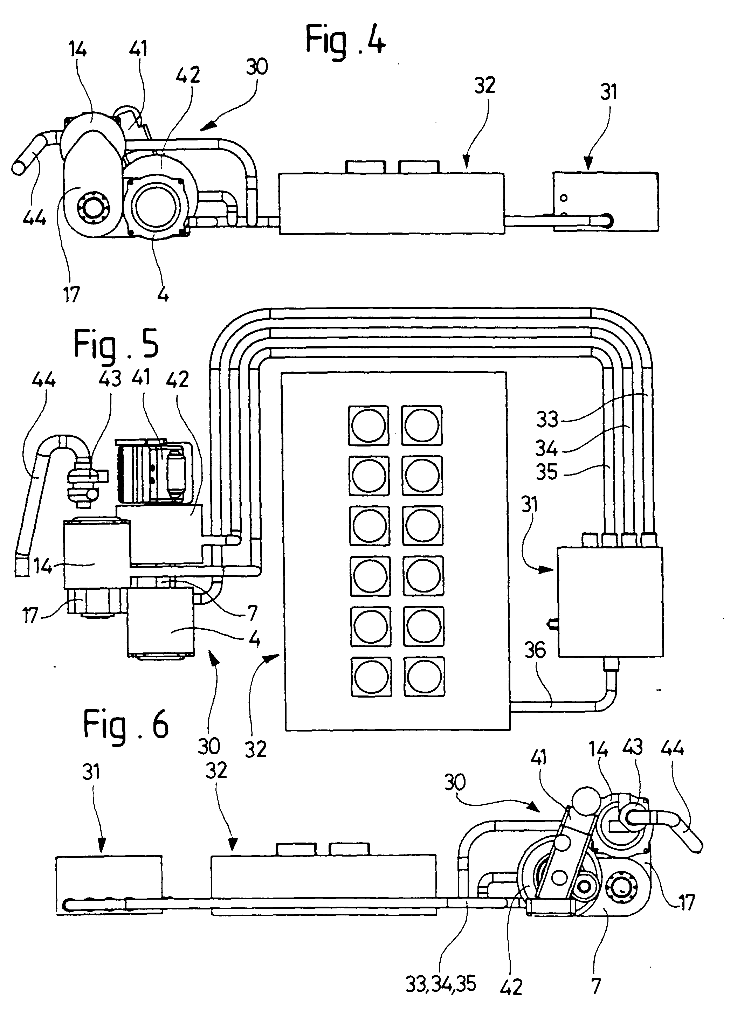

L'ensemble de traction illustré par les figures 2 à 6 comprend un groupe de traction tandem 1, un convertisseur statique 31 et une batterie d'accumulateurs électriques 32, qui sont reliés par des lignes électriques 33 à 36. Le groupe de traction 1 comporte tous les éléments décrits en référence à la figure 1. On reconnaît notamment dans les figures 2 à 6 les deux moteurs électriques 4 et 14, les deux réducteurs 7 et 17 et le plan médian 24. Les références 37 et 38 indiquent les sorties respectives des réducteurs 7 et 17, auxquelles sont raccordés les arbres de transmission 10 et 20, qui sont représentés schématiquement pour des raisons de clarté du dessin.

En plus des composants susmentionnés, l'ensemble de traction hybride comprend un groupe générateur 40 composé d'un moteur thermique 41 et d'une génératrice électrique 42 fixée à ce moteur, le rotor de la génératrice 42 étant couplé directement à l'arbre de vilebrequin du moteur 41. L'extrémité opposée de la génératrice 42 peut avantageusement être fixée au carter du réducteur gauche 7, si bien que l'ensemble du groupe générateur 40 et du groupe de traction 1 constitue un bloc compact 30 qui peut être fixé à la caisse du véhicule en trois ou quatre points seulement. Le moteur thermique 41 peut être de tout type connu, notamment Otto, Diesel ou autre, et dans le cas présent il est équipé d'un turbocompresseur 43 raccordé à un circuit d'échappement 44. Les liaisons entre le turbocompresseur 43 et le moteur 41 ne sont pas représentées, afin de clarifier le dessin. Dans cet exemple, les moteurs électriques 4 et 14 sont des moteurs asynchrones (moteurs à induction) triphasés, qui bien entendu peuvent aussi fonctionner en génératrices dans un mode de freinage électrique à récupération. La génératrice 42 est de préférence aussi du type asynchrone triphasé. De manière connue, le courant qu'elle produit est transmis par la ligne 34 à un convertisseur AC/DC incorporé au convertisseur 31 pour produire une tension continue susceptible de charger la batterie 32 par l'intermédiaire de la ligne 36. Cette tension continue, ou la tension fournie par la batterie 32, est transformée, par un convertisseur DC/AC incorporé au convertisseur 31, en un courant alternatif triphasé à tension variable et à fréquence variable qui alimente en parallèle les moteurs 4 et 14 par les lignes 33 et 35.

Dans le groupe de traction 1, le premier motoréducteur composé du moteur 4 et du réducteur 7 s'étend sensiblement horizontalement, tandis que le second motoréducteur composé du moteur 14 et du réducteur 17 s'étend sensiblement verticalement. La génératrice 42 est placée à gauche du réducteur 7, approximativement dans l'alignement de l'arbre d'entrée du réducteur 7, mais du côté opposé au moteur 4. Comme sa longueur axiale est à peu près la même que celle du moteur électrique 14 situé en arrière et légèrement au-dessus d'elle, la génératrice forme un ensemble compact avec les deux motoréducteurs et laisse assez de place sur sa gauche pour le moteur thermique 41. Celui-ci, malgré sa hauteur relativement grande, ne dépasse pas le niveau supérieur du moteur électrique 14, et en outre le turbocompresseur 43 prend place avantageusement au niveau du collecteur d'échappement (non représenté) du moteur thermique 41, à côté du moteur électrique 14 et au-dessus de l'arbre de transmission gauche. Il en résulte non seulement une grande compacité du bloc 30, mais également un accès aisé à tous les composants et une faible longueur des conduits de liaison entre eux dans le cas où ils ont un circuit de refroidissement commun à eau.

Dans la disposition représentée aux figures 2 à 6, le convertisseur 31 est placé dans une partie avant du véhicule (l'avant étant indiqué par la flèche A dans la figure 2), soit pour bénéficier d'un système de refroidissement séparé, soit parce que la place disponible à l'arrière est limitée. La lourde batterie 32 se trouve de préférence dans une partie centrale du véhicule, entre le convertisseur et le groupe de traction. S'il y a assez de place à l'arrière, on peut néanmoins placer le convertisseur 31 au voisinage du bloc 30, par exemple au-dessus de la génératrice 42 et du moteur électrique 4, dans la position 31' représentée en traits interrompus à la figure 3. Cette disposition est particulièrement intéressante dans le cas d'un système de refroidissement commun.

L'ensemble décrit ici peut faire l'objet de diverses variantes. Par exemple, le groupe générateur électrique peut être une pile à combustible. D'autre part, le bloc 30 pourrait être placé à l'avant du véhicule et entraîner les roues avant.

On notera aussi que l'ensemble de traction illustré par les figures 2 à 6 pourrait être complété par un deuxième groupe de traction, analogue à celui de la figure 1, pour entraîner les roues avant d'un véhicule à quatre roues motrices.

La présente invention est applicable non seulement à des véhicules routiers, mais aussi à des véhicules de travail tels que des élévateurs à fourche.

## Revendications

1. Ensemble de traction hybride série pour un véhicule automobile, ledit ensemble comprenant un groupe générateur électrique (40), au moins un groupe de traction tandem (1) comportant deux moteurs électriques entraînant des arbres de sortie respectifs mutuellement alignés et couplés respectivement à une roue gauche (2) et à une roue droite (3) du véhicule, et au moins un convertisseur statique (31) branché en série entre le groupe générateur et le groupe de traction tandem,
caractérisé en ce que le groupe de traction tandem comporte deux motoréducteurs (4 et 7, 14 et 17) comprenant chacun l'un des moteurs électriques (4, 14) et un réducteur (7, 17) pourvu d'un desdits arbres de sortie (9, 19) et d'un arbre d'entrée (8, 18) couplé à un rotor dudit moteur électrique, l'arbre d'entrée de chaque réducteur étant parallèle à l'arbre de sortie et à distance de celui-ci, les deux réducteurs étant disposés respectivement de part et d'autre d'un plan médian (24), en ce que, dans au moins l'un des motoréducteurs, le moteur électrique (4, 14) s'étend de l'autre côté dudit plan médian (24) par rapport au réducteur (7, 17), les arbres d'entrée respectifs (8,18) des réducteurs étant parallèles et distants l'un de l'autre, et en ce que le groupe générateur est disposé sensiblement en regard de l'un (4) des moteurs électriques, de l'autre côté du plan médian (24) par rapport à ce moteur.

2. Ensemble selon la revendication 1, caractérisé en ce que les deux réducteurs (7, 17) sont adjacents dans la région de leurs arbres de sortie (9, 19), où ils sont fixés l'un à l'autre.

3. Ensemble selon la revendication 1 ou 2, caractérisé en ce que dans chaque motoréducteur le moteur électrique (4, 14) s'étend de l'autre côté dudit plan médian (24) par rapport au réducteur (7, 17).

4. Ensemble selon la revendication 3, caractérisé en ce que les deux motoréducteurs sont sensiblement identiques.

5. Ensemble selon l'une des revendications précédentes, caractérisé en ce qu'un premier plan, passant par les arbres d'entrée (8) et de sortie (9) d'un (7) des réducteurs, est sensiblement perpendiculaire à un second plan passant par les arbres d'entrée (18) et de sortie (19) de l'autre réducteur (17).

6. Ensemble selon la revendication 5, caractérisé en ce que ledit premier plan est sensiblement horizontal et ledit second plan est sensiblement vertical.

7. Ensemble selon l'une des revendications précédentes, caractérisé en ce que le groupe générateur (40) est composé d'un moteur thermique (41) et d'une génératrice électrique (42) couplée à l'arbre du moteur thermique, et en ce que la génératrice (42) et le moteur électrique (4) disposé en regard de celle-ci sont sensiblement au niveau des arbres de sortie (9, 19) des réducteurs.

8. Ensemble selon la revendication 7, caractérisé en ce que le convertisseur statique (31) s'étend au-dessus de la génératrice (42).

9. Véhicule à traction hybride série comportant un ensemble de traction selon l'une des revendications 1 à 7.

10. Véhicule selon la revendication 9, caractérisé en ce que ledit groupe de traction (1) est couplé à des roues arrière (2, 3) du véhicule et en ce que le convertisseur statique (31) est placé à l'avant du véhicule et raccordé à une batterie d'accumulateurs électriques (32) située entre le convertisseur et le groupe de traction.

## Patentansprüche

1. Serielle Hybrid-Antriebseinheit für ein Kraftfahrzeug, wobei die Einheit eine Stromgeneratorgruppe (40), wenigstens eine Tandem-Antriebsgruppe (1) mit zwei Elektromotoren, die jeweilige, aufeinander ausgerichtete und mit einem linken Rad (2) bzw. mit einem rechten Rad (3) des Fahrzeugs gekoppelte Abtriebswellen antreiben, sowie wenigstens einen statischen Umrichter (31), der zwischen die Generatorgruppe und die Tandem-Antriebsgruppe in Serie geschaltet ist, umfaßt,
dadurch gekennzeichnet, daß die Tandem-Antriebsgruppe zwei Getriebemotoren (4 und 7, 14 und 17) enthält, die jeweils einen der Elektromotoren (4, 14) und ein Untersetzungsgetriebe (7, 17) umfassen, das mit einer der Abtriebswellen (9, 19) und mit einer mit einem Rotor des Elektromotors gekoppelten Antriebswelle (8, 18) versehen ist, wobei die Antriebswelle jedes Untersetzungsgetriebes zur Abtriebswelle parallel und von dieser beabstandet ist, wobei die beiden Untersetzungsgetriebe beiderseits der Mittelebene (24) angeordnet sind, daß sich in wenigstens einem der Getriebemotoren der Elektromotor (4, 14) auf der anderen Seite der Mittelebene (24) in bezug auf das Untersetzungsgetriebe (7, 17) befindet, wobei die jeweiligen Antriebswellen (8, 18) der Untersetzungsgetriebe zueinander parallel und voneinander beabstandet sind, und daß die Generatorgruppe im wesentlichen gegenüber einem (4) der Elektromotoren auf der anderen Seite der Mittelebene (24) in bezug auf diesen Motor angeordnet ist.

2. Einheit nach Anspruch 1, dadurch gekennzeichnet, daß die beiden Untersetzungsgetriebe (7, 17) im Bereich ihrer Abtriebswellen (9, 19), wo sie aneinander befestigt sind, benachbart sind.

3. Einheit nach Anspruch 1 oder 2, dadurch gekennzeichnet, daß sich in jedem Getriebemotor der Elektromotor (4, 14) auf der anderen Seite der Mittelebene (24) in bezug auf das Untersetzungsgetriebe (7, 17) befindet.

4. Einheit nach Anspruch 3, dadurch gekennzeichnet, daß die beiden Untersetzungsgetriebe im wesentlichen gleich sind.

5. Einheit nach einem der vorhergehenden Ansprüche, dadurch gekennzeichnet, daß eine erste Ebene, die durch die Antriebswelle (8) und die Abtriebswelle (9) eines (7) der Untersetzungsgetriebe verläuft, zu einer zweiten Ebene, die durch die Antriebswelle (18) und die Abtriebswelle (19) des anderen Untersetzungsgetriebes (17) verläuft, im wesentlichen senkrecht ist.

6. Einheit nach Anspruch 5, dadurch gekennzeichnet, daß die erste Ebene im wesentlichen horizontal ist und die zweite Ebene im wesentlichen vertikal ist.

7. Einheit nach einem der vorhergehenden Ansprüche, dadurch gekennzeichnet, daß die Generatorgruppe (40) aus einer Brennkraftmaschine (41) und aus einem Stromgenerator (42), der mit der Welle der Brennkraftmaschine gekoppelt ist, gebildet ist und daß sich der Generator (42) und der diesem gegenüber angeordnete Elektromotor (4) im wesentlichen auf seiten der Abtriebswellen (9, 19) der Untersetzungsgetriebe befinden.

8. Einheit nach Anspruch 7, dadurch gekennzeichnet, daß sich der statische Umrichter (31) über dem Generator (42) befindet.

9. Fahrzeug mit seriellem Hybridantrieb, das eine Antriebseinheit nach einem der Ansprüche 1 bis 7 enthält.

10. Fahrzeug nach Anspruch 9, dadurch gekennzeichnet, daß die Antriebsgruppe (1) mit den Hinterrädern (2, 3) des Fahrzeugs gekoppelt ist und daß der statische Umrichter (31) im vorderen Teil des Fahrzeugs angeordnet und mit einer Batterie (32) aus elektrischen Akkumulatoren verbunden ist, die sich zwischen dem Umrichter und der Antriebsgruppe befindet.

## Claims

1. Series hybrid traction assembly for a motor vehicle, said assembly comprising an electric generator set (40), at least one tandem traction set (1) comprising two electric motors driving respective output shafts respectively aligned with each other and respectively coupled to a left wheel (2) and a right wheel (3) of the vehicle, and at least one static converter (31) connected in series between the generator set and the tandem traction set,
characterized in that the tandem traction set comprise two back-gear motors (4 and 7, 14 and 17) each comprising one of the electric motors (4, 14) and a reducing gear (7, 17) provided with one of said output shafts (9, 19) and an input shaft (8, 18) coupled to a rotor of said electric motor, the input shaft of each reducing gear being parallel to the output shaft and at a distance from the latter, the two reducing gears being arranged respectively either side of a median plane (24), in that, in at least one of the back-gear motors, the electric motor (4, 14) extends on the other side of said median plane (24) with respect to the reducing gear (7, 17), the respective input shafts (8, 18) of the reducing gears being parallel and distant from each other, and in that the generator set is arranged substantially facing one- (4) of the electric motors, on the other side of the median plane (24) with respect to such motor.

2. Assembly according to claim 1, characterized in that the two reducing gears (7, 17) are adjacent in the region of their output shafts (9, 19), where they are fixed to each other.

3. Assembly according to claim 1 or 2, characterized in that in each back-gear motor the electric motor (4, 14) extends on the other side of said median plane (24) with respect to the reducing gear (7, 17).

4. Assembly according to claim 3, characterized in that the two back-gear motors are substantially identical.

5. Assembly according to any of the preceding claims, characterized in that a first plane, passing though the input (8) and output (9) shafts of one (7) of the reducing gears, is substantially perpendicular to a second plane passing through the input (18) and output (19) shafts of the other reducing gear (17).

6. Assembly according to claim 5, characterized in that said first plane is substantially horizontal and said second plane is substantially vertical.

7. Assembly according to any of the preceding claims, characterized in that the generator set (40) is formed of a heat engine (41) and an electric generator (42) coupled to the heat engine shaft, and in that the generator (42) and the electric motor (4) arranged facing the latter are substantially at the level of the output shafts (9, 19) of the reducing gears.

8. Assembly according to claim 7, characterized in that the static converter (31) extends above the generator (42).

9. Series hybrid traction vehicle comprising a traction set according to any of claims 1 to 7.

10. Vehicle according to claim 9, characterized in that said traction set (1) is coupled to rear wheels (2, 3) of the vehicle and in that the static converter (31) is placed at the front of the vehicle and connected to an electric accumulator battery (32) situated between the converter and the traction set.
